# EUROPEAN PATENT APPLICATION

(11) **EP 4 683 431 A1**
(43) Date of publication of application: **21.01.2026**
(21) Application number: 24814351.3
(22) Date of filing: 24.05.2024
(51) Int. Cl.: H05B 47/10, H05B 47/155, H05B 47/165, G09G 3/34, H05B 45/20

(54) **LIGHTING EFFECT GENERATION METHOD AND APPARATUS, LIGHTING EFFECT CONTROL METHOD AND MEDIUM**

(30) Priority: 02.06.2023 CN 202310648787
(71) Applicant: Shenzhen Qianyan Technology Ltd., Shenzhen, Guangdong 518055 (CN); Shenzhen Intellirocks Tech. Co., Ltd., Shenzhen, Guangdong 518055 (CN)
(72) Inventor: YAN, Guangzi, Shenzhen, Guangdong 518055 (CN); WU, Wenlong, Shenzhen, Guangdong 518055 (CN)
(74) Representative: Wang, Bo
(86) International application number: PCT/CN2024/095293
(87) International publication number: WO 2024/245154

(57) **Abstract**

A lighting effect generation method and apparatus, a lighting effect control method and a medium, The lighting effect generation method comprises the following steps: acquiring light-emitting unit layout information of a light, and generating on a drawing interface a plurality of light layout layers; acquiring sub-special effect information respectively generated in the light layout layers by the drawing interface receiving an external editing instruction, synthesizing the multiple pieces of sub-special effect information into lighting special effect information, and packaging the lighting special effect information into a lighting effect control instruction; and transmitting the lighting effect control instruction to a controller of the light so as to control the light to display a lighting special effect defined by the lighting special effect information.

## Description

### TECHNICAL FIELD

The present disclosure pertains to the technical field of lamps, and more specifically, relates to a lighting effect generation method, a lighting effect control method, a device, and a medium.

### BACKGROUND

With technological advancements, lamps are not only used for illumination, but for producing lighting special effects to foil the environmental atmosphere. For example, a light string is wrapped around a decorative object, and the visual appeal of the decorative object can be enhanced by controlling lamp beads on the light string to emit light in different colors. However, in general, traditional light strings can only produce a single lighting special effect, and the light-emitting effect thereof is too monotonous to meet needs on different occasions.

In view of this, industry insiders have proposed controlling lamp beads of a lamp to emit predetermined light rays through a controller, so that the lamp can produce different lighting special effects to meet the needs on different occasions. To enable the lamp to produce different lighting special effects, the industry insiders generally set the lighting special effects of the lamp through a mobile APP or a computer program. Specifically speaking, a canvas is generated on a user interface of the mobile APP or the computer program, and lighting special effects that need to be displayed by the lamp are edited on the canvas. For example, if one edits text on the canvas, the lamp beads of the lamp will emit predetermined light rays, and the light rays emitted by the lamp beads will form the corresponding text edited on the canvas.

It is relatively easy for a user to set a simple lighting special effect for the lamp through the mobile APP or the computer program. However, when a lighting special effect is relatively complex, it is difficult to set elements of the lighting special effect through a single canvas, which is prone to errors when setting the lighting special effect. For example, when setting a lighting effect that a plurality of animals run at different speeds in the grass on the canvas, the user needs to set the shape of the grass, the shape of the animals, the movement speeds of the animals, and the like in the same canvas; since a relatively large amount of content needs to be set and the elements influence each other, the user tends to make mistakes when setting the complex lighting special effect; as a result, the set lighting special effect does not conform to the expected one, thereby affects the use of the lighting special effect.

To avoid errors in setting a complex lighting special effect on the same canvas, the user needs to carefully set elements of the complex lighting special effect one by one, so that the lighting special effect meets expectations and runs without errors. However, in doing so, the user needs to spend a lot of time, leaving the efficiency of setting the lighting special effect affected.

### SUMMARY

It is an objective of the present application to provide a lighting effect generation method, a lighting effect control method, a device, and a medium to solve at least one of the above-mentioned problems.

To achieve objectives of the present application, technical solutions are adopted as follows.

To achieve one of the objectives of the present application, there is provided a lighting effect generation method, comprising steps as follows:
obtaining light-emitting unit layout information of a lamp, and generating a plurality of lamp layout layers in a drawing interface according to the light-emitting unit layout information;
obtaining sub-special effect information that is respectively generated in the lamp layout layers as the drawing interface receives an external editing instruction, synthesizing multiple pieces of sub-special effect information into lighting special effect information, and encapsulating the lighting special effect information into a lighting effect control instruction;
transmitting the lighting effect control instruction to a controller of the lamp to control the lamp to display a lighting special effect defined by the lighting special effect information.

To achieve one of the objectives of the present application, there is provided a lighting effect control method, comprising steps as follows:
receiving a lighting effect control instruction sent by an external apparatus, parsing and obtaining multiple pieces of sub-special effect information that correspond to the same lamp;
synthesizing light-emitting data that correspond to the same light-emitting unit of the lamp in the sub-special effect information on the basis of sub-special effect synthetic information carried in the sub-special effect information or on the basis of default sub-special effect synthetic information to generate light-emitting information;
outputting corresponding light-emitting information to light-emitting units of the lamp, and controlling corresponding light-emitting units to emit predetermined light rays, so as to form a predetermined lighting special effect.

To achieve one of the objectives of the present application, there is provided a lighting effect generation device, comprising:
a layer generation unit for obtaining light-emitting unit layout information of a lamp, and generating a plurality of lamp layout layers in a drawing interface according to the light-emitting unit layout information;
an instruction generation unit for obtaining sub-special effect information that is respectively generated in the lamp layout layers as the drawing interface receives an external editing instruction, synthesizing multiple pieces of sub-special effect information into lighting special effect information, and encapsulating the lighting special effect information into a lighting effect control instruction;
a drive unit for transmitting the lighting effect control instruction to a controller of the lamp to control the lamp to display a lighting special effect defined by the lighting special effect information.

To achieve one of the objectives of the present application, there is provided a computer-readable storage medium, in which program codes that can be called by a processor to execute the lighting effect generation method or the lighting effect control method are stored.

Compared with the prior art, the present application has advantages in a plurality of aspects, which include, but are not limited to:
on the one hand, in the lighting effect generation method, the present application respectively edits and generates different sub-special effects on a plurality of lamp layout layers, and synthesizes a plurality of sub-special effects into one lighting special effect; in other words, the lighting special effect is broken down into a plurality of sub-special effects, and the plurality of sub-special effects are set separately, so as to reduce the difficulty in setting a complex lighting special effect and shorten the setting time;
on the other hand, in the lighting effect generation method, the present application synthesizes multiple pieces of sub-special effect information into lighting special effect information, and combines the multiple pieces of sub-special effect information with each other, without interference with each other, so that the multiple pieces of sub-special effect information merge into one piece of complete lighting special effect information, which facilitates the controller controlling the lamp to display a lighting special effect defined by the lighting special effect information on the basis of the lighting special effect information.

### BRIEF DESCRIPTION OF THE DRAWINGS

Figure 1 is a circuit principle diagram of a light-emitting apparatus provided in the present application.
Figure 2 is a structure diagram of a plurality of light-emitting units of the light-emitting apparatus in a first embodiment of the present application.

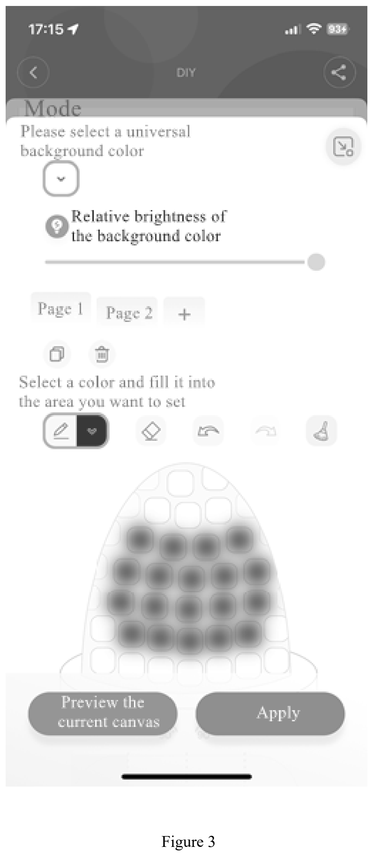

Figure 3 is a diagram of a currently visible layer on a drawing interface provided in an embodiment of the present application.
Figure 4 is a flow diagram of a lighting effect generation method in the present application.
Figure 5 is a flow diagram of Step S11 in the lighting effect generation method of the present application.
Figure 6 is a flow diagram of Step S112 in the lighting effect generation method of the present application.
Figure 7 is a flow diagram of Step S12 in the lighting effect generation method of the present application.
Figure 8 is a flow diagram of Step S121 in the lighting effect generation method of the present application.
Figure 9 is a flow diagram of Step S112 in a lighting effect generation method in another embodiment of the present application.
Figure 10 is a flow diagram of a lighting effect control method in the present application.
Figure 11 is a flow diagram of Step S22 in the lighting effect control method of the present application.
Figure 12 is a structure diagram of a lighting effect generation device in the present application.
Figure 13 is a diagram of a plurality of lamp layout sublayers of a lamp in a second embodiment of the present application.

### DETAILED DESCROPTION

The present application provides a lighting effect generation method. Based on the lighting effect generation method, a plurality of lamp layout layers are generated on a drawing interface of a terminal apparatus. Sub-lighting effect information is set in the lamp layout layers, and the sub-lighting effect information of the lamp layout layers is synthesized into one piece of lighting special effect information. The lighting special effect information is output to a lamp, so as to control light-emitting units of the lamp to emit predetermined light rays to form a predetermined lighting special effect. As such, complex lighting special effect information is broken down into multiple pieces of sub-special effect information, and the sub-special effect information is respectively set in the plurality of lamp layout layers, so as to reduce the difficulty in setting the lighting special effect information, improve the accuracy of setting the lighting special effect information, reduce the setting time, and improve the setting efficiency.

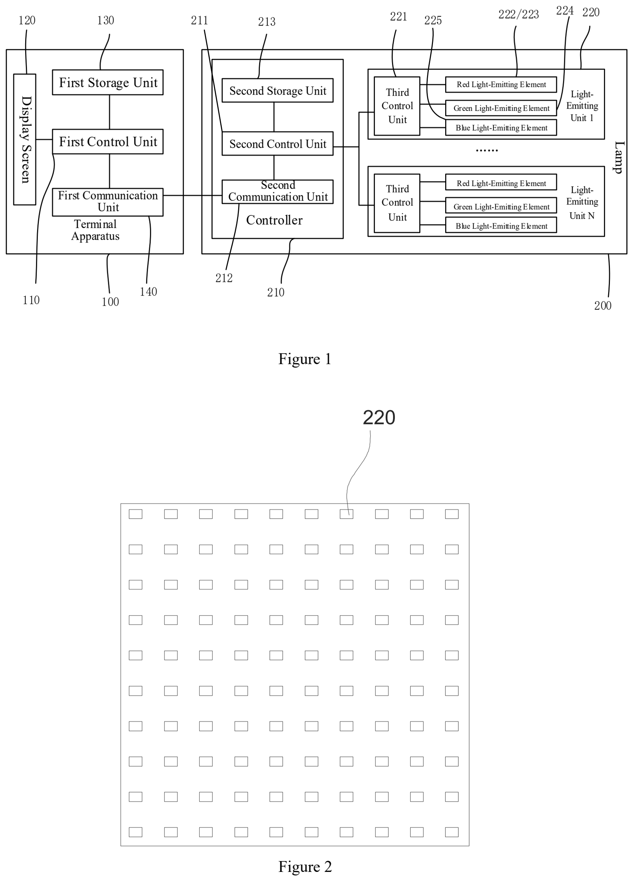

To implement the lighting effect generation method, the present application provides a light-emitting apparatus. In combination with Figure 1, the light-emitting apparatus comprises a terminal apparatus 100 and a lamp 200. The terminal apparatus 100 is electrically connected to the lamp 200. The lighting effect generation method is implemented on the basis of the light-emitting apparatus.

The lamp 200 comprises a controller 210 and a plurality of light-emitting units 220. The controller 210 is electrically connected to the plurality of light-emitting units 220. The terminal apparatus 100 outputs a lighting special effect instruction to the controller 210, so as to control the plurality of light-emitting units 220 to emit predetermined light rays through the controller 210, respectively. The light rays respectively emitted by the light-emitting units 220 are combined to form a predetermined lighting special effect. In the present embodiment, the terminal apparatus 100 is wirelessly connected to the controller 210 to establish a data communication link between the terminal apparatus 100 and the controller 210 to facilitate data communication with each other. Preferably, the terminal apparatus 100 is a mobile phone, a tablet, or a computer.

Specifically speaking, the terminal apparatus 100 comprises a first control unit 110, a display screen 120, a first storage unit 130, and a first communication unit 140. The first control unit 110 is electrically connected to the display screen 120, the first storage unit 130, and the first communication unit 140, respectively.

The controller 210 comprises a second control unit 211, a second communication unit 212, and a second storage unit 213. The second control unit 211 is electrically connected to the second communication unit 212 and the second storage unit 213, respectively. The first control unit 110 of the terminal apparatus 100 sends data to the controller 210 through the first communication unit 140. The controller 210 receives the data sent by the terminal apparatus 100 through the second communication unit 212. The second communication unit 212 sends the received data to the second control unit 211. The second control unit 211 processes the received data.

The light-emitting units 220 each comprise a third control unit 221 and a plurality of light-emitting elements 222. The third control unit 221 is electrically connected to the plurality of light-emitting elements 222, respectively. The third control unit 221 is used to control the plurality of light-emitting elements 222 to emit predetermined light rays. Specifically speaking, the light-emitting units 220 each comprise three light-emitting elements 222, which are a red light-emitting element 223, a green light-emitting element 224, and a blue light-emitting element 225, respectively. The third control unit 221 controls the red light-emitting element 223, the green light-emitting element 224, and the blue light-emitting element 225 to emit predetermined light rays, which can form light rays in any color and/or with any intensity.

The terminal apparatus 100 sends a lighting effect control instruction to the controller 210. The second control unit 211 of the controller 210 parses the lighting effect control instruction to obtain lighting special effect information. The lighting special effect information is used to control the light-emitting units 220 of the lamp 200 to produce predetermined lighting effects to form a predetermined lighting special effect. The lighting special effect information is used to control the lighting special effect of the lamp 200. The lighting special effect information includes multiple pieces of light-emitting information. The light-emitting information is used to control any one of light-emitting color, light-emitting intensity, light-emitting frequency, and light-emitting duration of corresponding light-emitting units 220.

The second control unit 211 of the controller 210 is electrically connected to the third control unit 221 of the light-emitting unit 220. The second control unit 211 outputs corresponding light-emitting information to the third control unit 221. The light-emitting information includes element data of the light-emitting elements 222. The element data are used to control one or more of the light-emitting intensity, the light-emitting frequency, and the light-emitting duration of the light-emitting elements 222.

After receiving the light-emitting information, the third control unit 221 controls corresponding light-emitting elements 222 to emit predetermined light rays on the basis of the element data corresponding to the three light-emitting elements 222 in the light-emitting information. The three light-emitting elements 222 emit predetermined light rays so that the light-emitting unit 220 emit light rays in predetermined colors. Moreover, the third control unit 221 can also cause the light-emitting units 220 to constantly change the light-emitting color and/or the light-emitting intensity and/or the light-emitting duration and/or the light-emitting frequency by controlling the light-emitting frequency and/or the light-emitting intensity and/or the light-emitting duration of the light-emitting elements 222.

A plurality of light-emitting units 220 of the lamp 200 are set on a flat surface or a curved surface. The plurality of light-emitting units 220 are arranged in a predetermined form, e.g., they are arranged in the form of a dot matrix on a flat surface or a curved surface.

In a first embodiment, in combination with Figure 2, a plurality of light-emitting units 220 of the lamp 200 are set in the form of a dot matrix on a flat surface. Preferably, the light-emitting units 220 are lamp beads.

In a second embodiment, the lamp 200 further comprises a housing, which is in a semi-ellipsoidal shape. The plurality of light-emitting units 220 are set in the form of a dot matrix on an inner wall of the housing. The housing is made from a transparent material, so that the light rays emitted by the light-emitting units 220 set on the inner wall of the housing can be transmitted to the outside through the housing. Preferably, the light-emitting units 220 are lamp beads.

In a typical embodiment of the present application, for the convenience of describing the lighting effect generation method, the lighting effect generation method is discussed in combination with the first embodiment. However, the arrangement form of the plurality of light-emitting units 220 in the first embodiment should not be understood as a limitation on the lighting effect generation method. The lighting effect generation method is also applicable to lamps 200 with different arrangement forms.

The controller 210 is electrically connected to the light-emitting units 220. Position information of the light-emitting units 220 is stored in the second storage unit 213 of the controller 210. The position information of the plurality of light-emitting units 220 constitutes light-emitting unit layout information of the lamp 200.

The terminal apparatus 100 can retrieve the light-emitting unit layout information from the second storage unit 213 of the controller 210. In the light of the light-emitting unit layout information, the first control unit 110 can create a plurality of identical lamp layout layers in a drawing interface of the display screen 120. Specifically speaking, a plurality of coordinate points are provided in the lamp layout layers, and each of the coordinate points corresponds to the position information of one of the light-emitting units 220 in the lamp 200. In other words, based on the position information of the plurality of light-emitting units 220 in the lamp 200, corresponding coordinate points are generated in the drawing interface, and a plurality of coordinate points constitute the lamp layout layers. Preferably, the coordinate points are visible or invisible in the lamp layout layers.

The drawing interface can receive a layer selection instruction, thereby selecting one lamp layout layer from the plurality of lamp layout layers and setting the selected lamp layout layer as a currently visible layer. Afterwards, the drawing interface can receive an external editing instruction, thereby performing editing in the currently visible layer to form a sub-special effect. Upon the completion of the editing, the first control unit 110 obtains sub-special effect information, then sequentially arranges the other lamp layout layers as the currently visible layer, and performs editing in the corresponding currently visible layer to form sub-special effects. After obtaining multiple pieces of sub-special effect information, the first control unit 110 synthesizes the plurality of sub-special effect information to form lighting special effect information.

The first control unit 110 outputs the lighting special effect information to the controller 210. The controller 210 obtains the light-emitting information corresponding to the light-emitting units 220 from the lighting special effect information, and controls corresponding light-emitting units 220 to emit corresponding light rays on the basis of the light-emitting information. The light rays respectively emitted by a plurality of light-emitting units 220 form a predetermined lighting special effect.

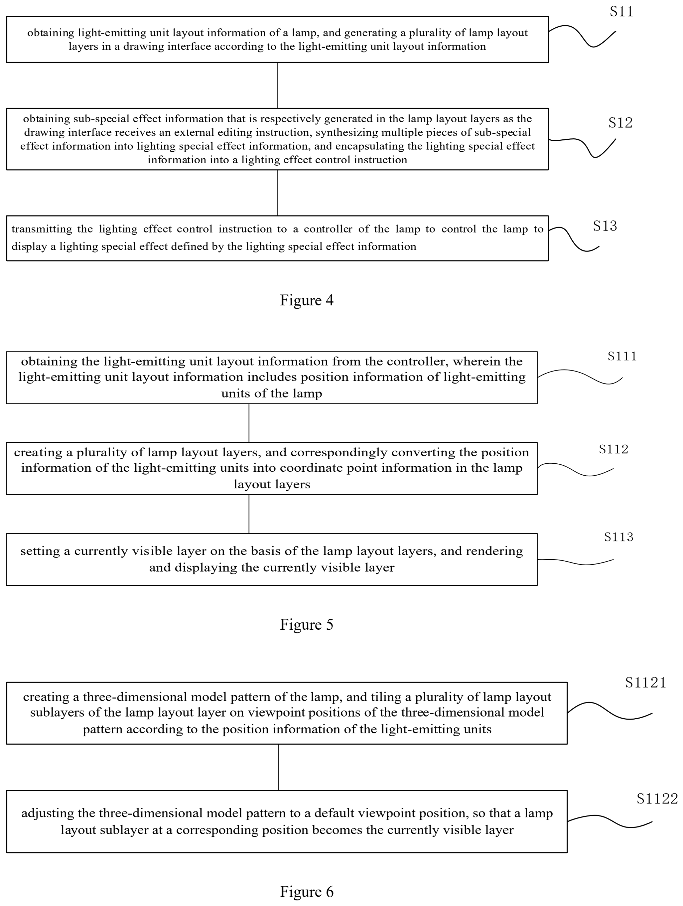

In the typical embodiment of the present application, the lighting effect generation method is implemented on the basis of the above-mentioned light-emitting apparatus. Specifically speaking, in combination with Figure 4, the lighting effect generation method comprises the following steps:

Step S11: obtaining light-emitting unit layout information of a lamp, and generating a plurality of lamp layout layers in a drawing interface according to the light-emitting unit layout information;

The terminal apparatus is wirelessly connected to the second communication unit of the controller through the first communication unit thereof, so as to establish a data communication link between the terminal apparatus and the controller. The first control unit of the terminal apparatus sends an information acquisition instruction to the controller through the first communication unit. After receiving the information acquisition instruction sent by the terminal apparatus through the second communication unit, the second control unit of the controller retrieves the light-emitting unit layout information of the lamp as stored in the second storage unit, and sends the light-emitting unit layout information to the terminal apparatus through the second communication unit.

The light-emitting unit layout information includes the position information of the light-emitting units of the lamp. After receiving the light-emitting unit layout information, in the light of the light-emitting unit layout information, the first control unit of the terminal apparatus generates a plurality of lamp layout layers on the drawing interface of the display screen. There are a plurality of coordinate points in the lamp layout layers. Corresponding to the position information of a plurality of light-emitting units of the lamp, the plurality of coordinate points are generated. In other words, each coordinate point is mapped to a corresponding light-emitting unit.

Specifically speaking, in combination with Figure 5, Step S11 further comprises the following steps:

Step S111, obtaining the light-emitting unit layout information from the controller, wherein the light-emitting unit layout information includes position information of light-emitting units of the lamp;

The terminal apparatus obtains the light-emitting unit layout information of the lamp from the controller, and the light-emitting unit layout information includes position information of light-emitting units of the lamp. For example, in the first embodiment, when a plurality of light-emitting units are set in the form of a dot matrix on a flat surface, the position information of the light-emitting units collectively constitutes the light-emitting unit layout information. Alternatively, in the second embodiment, when a plurality of light-emitting units are set in the form of a dot matrix on the inner wall of the semi-ellipsoidal housing, the position information of the light-emitting units also collectively constitutes the light-emitting unit layout information. Preferably, the position information of the light-emitting units is set in the form of coordinate points.

Step S112: creating a plurality of lamp layout layers, and correspondingly converting the position information of the light-emitting units into coordinate point information in the lamp layout layers;

After obtaining the light-emitting unit layout information of the lamp, the first control unit of the terminal apparatus generates a plurality of identical blank layers in the drawing interface of the display screen. Afterwards, the first control unit obtains the position information of the light-emitting units from the light-emitting unit layout information, and correspondingly converts the position information into coordinate point information adapted to the blank layers. The first control unit generates corresponding coordinate points in the blank layers on the basis of the coordinate point information, thereby generating a plurality of coordinate points in the blank layers. The plurality of coordinate points, together with the blank layers, form the lamp layout layers. In other words, the light-emitting units are mapped to corresponding coordinate points in the lamp layout layers to simulate the layout of a plurality of light-emitting units of the lamp through the lamp layout layers, so as to adapt to the lighting special effect of a plurality of light-emitting units of the lamp through the drawing of the lamp layout layers. Preferably, the coordinate points on the lamp layout layers can be displayed or not displayed.

For example, in the first embodiment, in the light of the lamp, a lamp layout layer in the two-dimensional form is generated in the drawing interface; in other words, the coordinate points are generated on the same flat surface in the lamp layout layer.

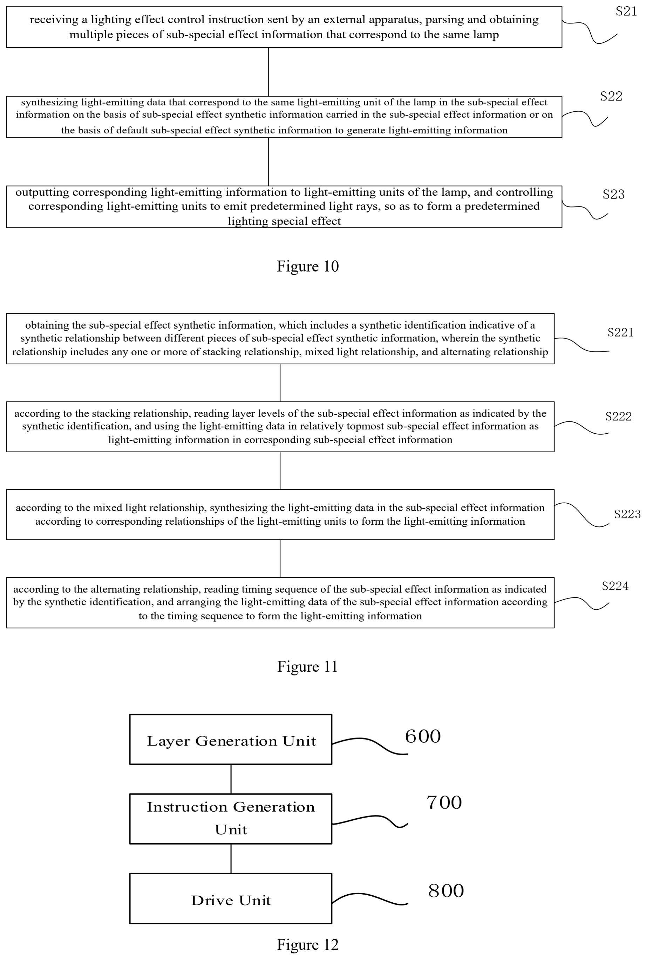

Alternatively, in the second embodiment, in the light of the lamp, a lamp layout layer in the three-dimensional form is generated in the drawing interface; in other words, the coordinate points are set in the three-dimensional form on the lamp layout layer to generate a lamp layout layer in a three-dimensional structure. Preferably, referring to Figure 12, a lamp layout layer in the three-dimensional form is formed by combining a plurality of lamp layout sublayers in a certain order. Taking the lamp with a semi-ellipsoidal housing as an example, the semi-ellipsoidal surface can be divided into four parts; in other words, there are four lamp layout sublayers; the four lamp layout sublayers are arranged in a certain order to constitute a complete lamp layout layer.

In the light of the light-emitting layout information, the first control unit loads coordinate points on the blank layers to generate a plurality of identical lamp layout layers.

Step S113, setting a currently visible layer on the basis of the lamp layout layers, and rendering and displaying the currently visible layer;

There are a plurality of lamp layout layers in the drawing interface, and the plurality of lamp layout layers are set on the drawing interface in the manner of overlapping with each other or in parallel with each other. To facilitate editing the plurality of lamp layout layers, the first control unit can receive a layer selection instruction and set one or more lamp layout layers among them as the currently visible layer, so as to receive an external editing instruction and edit a corresponding sub-special effect on the currently visible layer.

In one embodiment, the plurality of lamp layout layers are set in the manner of overlapping with each other on the drawing interface. After receiving a corresponding layer selection instruction, the first control unit sets one of the lamp layout layers as the currently visible layer, and places the currently visible layer on top of the rest of the plurality of lamp layout layers, so that the drawing interface receives an external editing instruction and edits a sub-special effect on the currently visible layer.

In another embodiment, the plurality of lamp layout layers are set in parallel with each other on the drawing interface. After receiving a corresponding layer selection instruction, the first control unit sets one or more lamp layout layers among them as the currently visible layer, and said one or more lamp layout layers can receive an external editing instruction, while the rest of the lamp layout layers cannot receive an external editing instruction before they are set as the currently visible layer.

In one embodiment, when a lamp layout layer is set as the currently visible layer, the first control unit can obtain environment characteristics of an environment where a plurality of light-emitting units of the lamp are located from the controller. The first control unit correspondingly converts and sets the environment characteristics on the currently visible layer to better simulate the environment where the plurality of light-emitting units of the lamp are located, thereby better editing a sub-special effect on the currently visible layer. For example, taking the first embodiment as an example, a plurality of light-emitting units are set on a screen where cartoon characters are drawn; the controller uses the cartoon characters as the environment characteristics; after obtaining the environment characteristics of the cartoon characters, the first control unit correspondingly sets the environment characteristics of the cartoon characters on the currently visible layer to better adapt to the environment where the plurality of light-emitting units of the lamp are located, thereby better editing a sub-special effect adapted to the lamp.

In one embodiment, when a plurality of light-emitting units of the lamp are arranged in a three-dimensional structure, e.g., when a plurality of light-emitting units are set on the inner wall of the semi-ellipsoidal housing in the second embodiment, in combination with Figure 6, Step S112 further comprises the following steps:

Step S1121, creating a three-dimensional model pattern of the lamp, and tiling a plurality of lamp layout sublayers of the lamp layout layers on view positions of the three-dimensional model pattern according to the position information of the light-emitting units;

The first control unit of the terminal apparatus obtains three-dimensional model pattern information of the housing of the lamp from the controller. The first control unit introduces the three-dimensional model pattern into the lamp layout sublayers, so that the coordinate points are correspondingly set on the three-dimensional model pattern to simulate positions of the light-emitting units of the lamp as set on the housing, so as to better adapt to the lamp structure and better edit sub-special effects. For example, if the housing of the lamp is semi-ellipsoidal, the three-dimensional model pattern of the semi-ellipsoidal housing is introduced into the lamp layout layers to generate a semi-ellipsoidal three-dimensional model in the lamp layout layers, and the coordinate points mapped to the light-emitting units are correspondingly mapped to the semi-ellipsoidal three-dimensional model to simulate the specific structure of the lamp on the lamp layout layers.

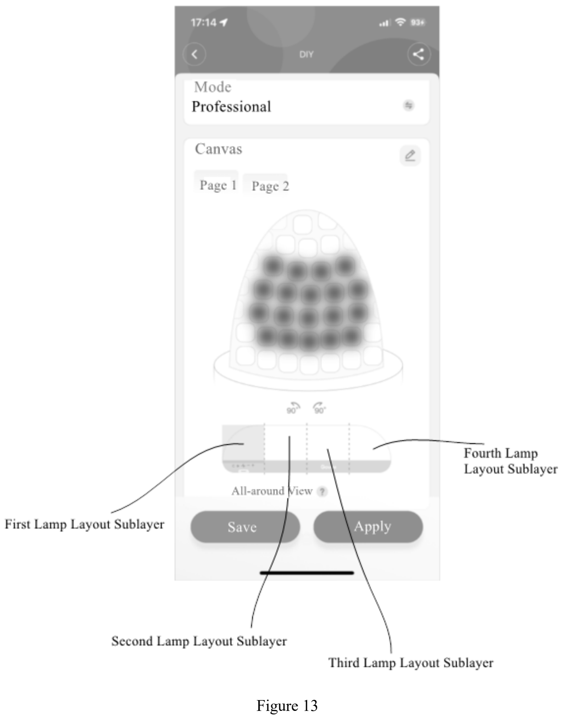

The lamp layout layer in the three-dimensional form is formed by combining a plurality of lamp layout sublayers in a certain order. Referring to Figure 13, taking the lamp with a semi-ellipsoidal housing as an example, the semi-ellipsoidal surface is divided into four parts; in other words, there are four lamp layout sublayers; these four lamp layout sublayers are arranged in a certain order to form a complete lamp layout layer.

Step S1122, adjusting the three-dimensional model pattern to a default view position, so that a lamp layout sublayer at a corresponding position becomes the currently visible layer;

The first control unit receives a layer selection instruction to set one lamp layout sublayer in the lamp layout layer as the currently visible layer. Since the three-dimensional model pattern is a three-dimensional structure, the display screen cannot completely display all parts of the three-dimensional model pattern at the same time. However, by changing the angle of the three-dimensional model pattern, details of different parts of the three-dimensional model pattern can be observed. The view from which lamp layout sublayers can be displayed is referred to as the default view position. By rotating the three-dimensional model pattern, different lamp layout sublayers can respectively enter the default view position, so as to facilitate editing the lamp layout sublayer at the default view position.

The first control unit receives an angle switching instruction to adjust the angle of the three-dimensional model pattern, selects a lamp layout sublayer that corresponds to one angle, and then sets and moves the selected lamp layout sublayer to the default view position. The lamp layout sublayer that enters the default view position is referred to as the currently visible layer. A special effect is edited on the currently visible layer. Afterwards, the visible layer is canceled, the three-dimensional model pattern is rotated continuously, a lamp layout sublayer is selected, the selected lamp layout sublayer is set as the currently visible layer, and the special effect is edited continuously. Afterwards, the above steps are repeated until the special effect is respectively edited on a plurality of lamp layout sublayers and the editing of the sub-special effects of the entire lamp layout layer is completed. For example, referring to Figure 13, the first lamp layout sublayer is selected as the currently visible layer from four lamp layout sublayers.

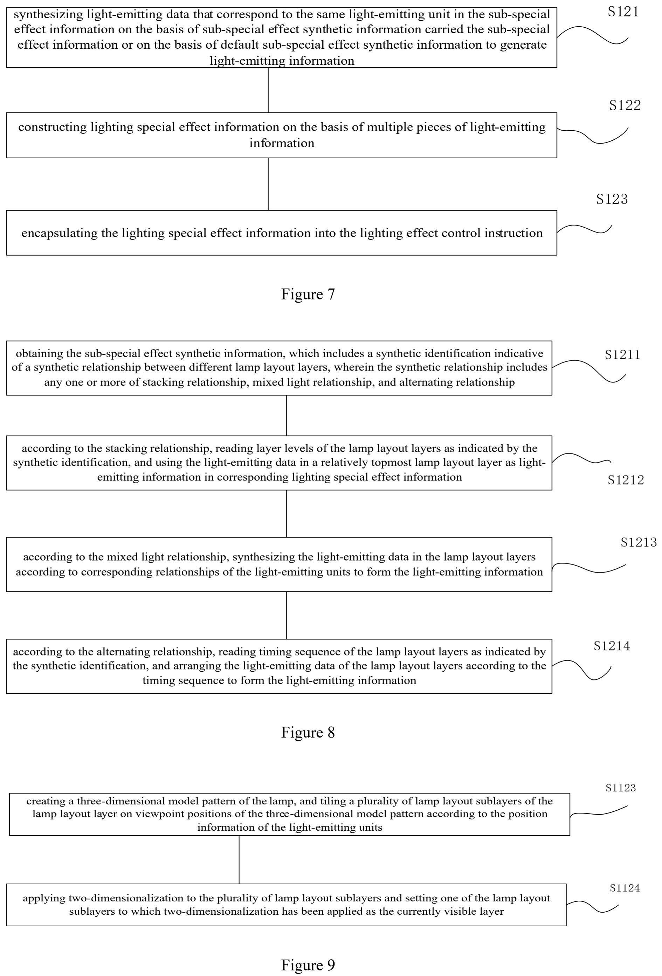

In one embodiment, when a plurality of light-emitting units of the lamp are arranged in a three-dimensional structure, e.g., when a plurality of light-emitting units are set on the inner wall of the semi-ellipsoidal housing in the second embodiment, Step S112, in combination with Figure 9, further comprises the following steps:

Step S1123, creating a three-dimensional model pattern of the lamp, and tiling a plurality of lamp layout sublayers of the lamp layout layer on viewpoint positions of the three-dimensional model pattern according to the position information of the light-emitting units;

For the specific content of Step S1123, see Step S1121. To save space, it will not be repeated herein.

Step S1124, applying two-dimensionalization to the plurality of lamp layout sublayers and setting one of the lamp layout sublayers to which two-dimensionalization has been applied as the currently visible layer;

After the lamp layout sublayers are tiled on the view positions of the three-dimensional model pattern, the lamp layout sublayers each exhibit a three-dimensional structure. Afterwards, the lamp layout sublayers in the three-dimensional structure are subjected to two-dimensionalization. In other words, the lamp layout sublayers in the three-dimensional structure are converted into the two-dimensional structure, so that the lamp layout sublayers become planar layers. Preferably, the three-dimensional model pattern is also subjected to two-dimensionalization, so that the lamp layout sublayers are embedded with corresponding parts of the three-dimensional model pattern that has been subjected to two-dimensionalization, so as to facilitate intuitively understanding the structural relationship between the lamp layout sublayers and the corresponding parts of the three-dimensional model pattern.

Afterwards, the first control unit receives a layer selection instruction to set one lamp layout sublayer among the plurality of lamp layout sublayers as the currently visible layer. A special effect is edited on the currently visible layer. Then, the currently visible layer is canceled to restore the currently visible layer to a lamp layout sublayer. Subsequently, another lamp layout sublayer among the plurality of lamp layout sublayers is set as the currently visible layer to edit the special effect. Afterwards, the above steps are repeated until the special effect is respectively edited on the selected lamp layout sublayers and the editing of the sub-special effects of the entire lamp layout layer is completed. For example, referring to Figure 13, the first lamp layout sublayer is selected as the currently visible layer from four lamp layout sublayers.

Step S12, obtaining sub-special effect information that is respectively generated in the lamp layout layers as the drawing interface receives an external editing instruction, synthesizing multiple pieces of sub-special effect information into lighting special effect information, and encapsulating the lighting special effect information into a lighting effect control instruction;

The drawing interface receives an external editing instruction, thereby editing a sub-special effect on the currently visible layer. Specifically speaking, the light-emitting data of a plurality of coordinate points are edited on the currently visible layer, and the light-emitting data of the plurality of coordinate points form a sub-special effect on the currently visible layer. The light-emitting data include any one or more of light-emitting color, light-emitting intensity, light-emitting frequency, and light-emitting duration of the coordinate points. By setting the light-emitting data of the plurality of coordinate points, a static or dynamic dot matrix graphic can be formed on the currently visible layer.

For example, by connecting a plurality of coordinate points in the currently visible layer through the external editing instruction, a dot matrix graphic is generated on the currently visible layer, and any one or more of light-emitting color, light-emitting intensity, light-emitting frequency, and light-emitting duration of corresponding coordinate points are set, so as to generate a sub-special effect.

In one embodiment, the external editing instruction can be triggered by an external tool such as a mouse or a stylus. Alternatively, the display screen is a touch screen, and the user can also trigger the external editing instruction by touching the display screen with his or her fingers.

Upon the completion of editing the sub-special effect on the currently visible layer, the currently visible layer is restored to an editing layer. Afterwards, by following the above steps, a plurality of lamp layout layers are sequentially and respectively set as the currently visible layer, sub-special effects are respectively set for the currently visible layer, and the currently visible layer is set as an editing layer upon the completion of editing the sub-special effects. Each editing layer corresponds to a different sub-special effect. Upon the completion of editing a plurality of sub-special effects, the first control unit obtains sub-special effect information corresponding to editing layers from the drawing interface, and then synthesizes multiple pieces of sub-special effect information into one piece of lighting special effect information. For example, the sub-special effect in the first editing layer is a dynamic special effect of a running hare, the sub-special effect in the second editing layer is a dynamic special effect of a running tortoise, and the sub-special effect in the third editing layer is a static special effect of a forest; the sub-special effects that respectively correspond to the three editing layers are combined to form the lighting special effect information of the race between the hare and the tortoise in the forest.

After obtaining the lighting special effect information, the first control unit encapsulates the lighting special effect information into a lighting effect control instruction, and outputs the lighting effect control instruction to the controller. Based on the lighting effect control instruction, the controller controls the light-emitting units of the lamp to emit corresponding light rays to form a corresponding lighting special effect.

Specifically speaking, in combination with Figure 7, Step S 12 further comprises specific steps as follows:

Step S121, synthesizing light-emitting data that correspond to the same light-emitting unit in the sub-special effect information on the basis of sub-special effect synthetic information carried the sub-special effect information or on the basis of default sub-special effect synthetic information to generate light-emitting information;

The lighting special effect information is composed of multiple pieces of light-emitting information. Each piece of light-emitting information corresponds to one light-emitting unit. The light-emitting information is used to instruct the light-emitting units to emit corresponding light rays in a predetermined time period. The light-emitting information is composed of a plurality of light-emitting data, which are arranged in sequence according to the light-emitting timing sequence.

The plurality of sub-special effects may call the same light-emitting unit in different time slices or the same time slice. In other words, the same light-emitting unit may correspond to light-emitting data of a plurality of sub-special effects in the same time slice or time period, which leads to confusion when the light-emitting unit emits light. To solve this problem, sub-special effect synthetic information is added to the sub-special effect information or the first control unit assigns default sub-special effect synthetic information to the sub-special effect information. Through the sub-special effect synthetic information, the synthetic relationship of the light-emitting data of multiple pieces of sub-special effect information corresponding to the same light-emitting unit in the same time slice or time period can be determined to determine the color and/or intensity and/or light-emitting frequency of the light rays emitted by the light-emitting unit in the time slice. The default sub-special effect synthetic information is the sub-special effect synthetic information specified by the first control unit for the sub-special effect information when no sub-special effect synthetic information is added to the sub-special effect information, such as the mixed light relationship data as described below.

Specifically speaking, the sub-special effect synthetic information includes at least three kinds of synthetic relationships, which are stacking relationship, mixed light relationship, and alternating relationship, respectively. In combination with Figure 8, for the specific synthetic relationships, see the specific steps in Step S121:

Step S1211, obtaining the sub-special effect synthetic information, which includes a synthetic identification indicative of a synthetic relationship between different lamp layout layers, wherein the synthetic relationship includes any one or more of stacking relationship, mixed light relationship, and alternating relationship;

The sub-special effect synthetic information carried in the sub-special effect information or the default sub-special effect synthetic information includes a synthesis identification, which is used to indicate the synthetic relationship between different editing layers, i.e., different pieces of sub-special effect information. For example, the synthetic information includes a layer level, wherein layer level 1 represents the stacking relationship, layer level 2 represents the mixed light relationship, and layer level 3 represents the alternating relationship; layer level 1 is the highest level, layer level 2 comes next, and layer level 3 follows. In the same time slice or time period, if multiple pieces of sub-special effect information have corresponding light-emitting data for the same light-emitting unit and differ in the sub-special effect synthetic information, then the light-emitting data corresponding to the sub-special effect information with the highest level is used as the light-emitting information of the corresponding light-emitting unit, or the light-emitting data of a plurality of sub-special effects with the highest level and the same level are synthesized to generate the light-emitting information of the light-emitting unit.

Step S1212, according to the stacking relationship, reading layer levels of the lamp layout layers as indicated by the synthetic identification, and using the light-emitting data in a relatively topmost lamp layout layer as light-emitting information in corresponding lighting special effect information;

The stacking relationship is as follows: in the same time slice or time period, multiple pieces of sub-special effect information have corresponding light-emitting data for the same light-emitting unit; the sub-special effect synthetic information respectively corresponding to the multiple pieces of sub-special effect information has different synthetic identifications corresponding to the light-emitting unit; if one of the synthetic identifications represents the stacking relationship and has the highest layer level, then the light-emitting data corresponding to the synthetic identification representing the stacking relationship is used as the light-emitting information in the same time slice or time period.

For example, regarding the three sub-special effects of the lighting special effect information of the race between the hare and the tortoise in the forest as mentioned above, in the first time slice, both first light-emitting data in the sub-special effect information representing the tortoise and second light-emitting data in the sub-special effect information representing the forest correspond to the first light-emitting unit. In the first time slice, corresponding to the first light-emitting unit, the sub-special effect information representing the tortoise has sub-special effect synthetic information on layer level 1 and in the stacked relationship; corresponding to the first light-emitting unit, the sub-special effect information representing the forest has sub-special effect synthetic information on layer level 2; as such, in the first time slice, the first light-emitting data in the sub-special effect information representing the tortoise is used as the light-emitting information of the first light-emitting unit.

Step S1213, according to the mixed light relationship, synthesizing the light-emitting data in the lamp layout layers according to corresponding relationships of the light-emitting units to form the light-emitting information;

The mixed light relationship is as follows: in the same time slice or time period, multiple pieces of sub-special effect information have corresponding light-emitting data for the same light-emitting unit; the sub-special effect synthetic information respectively corresponding to the multiple pieces of sub-special effect information has the same synthetic identification or different synthetic identifications corresponding to the light-emitting unit; if a plurality of synthetic identifications among them represent the mixed light relationship and have the highest layer level, then the light-emitting data corresponding to the plurality of synthetic identifications representing the mixed light relationship are subjected to light mixing calculation to generate the light-emitting information in the same time slice or time period.

For example, regarding the three sub-special effects of the lighting special effect information of the race between the hare and the tortoise in the forest as mentioned above, in the second time slice, third light-emitting data in the sub-special effect representing the tortoise, fourth light-emitting data in the sub-special effect representing the hare, and fifth light-emitting data in the sub-special effect representing the forest all correspond to the second light-emitting unit. In the second time slice, corresponding to the second light-emitting unit, the sub-special effect information representing the tortoise has sub-special effect synthetic information on layer level 2 and in the mixed light relationship; corresponding to the second light-emitting unit, the sub-special effect information representing the hare has sub-special effect synthetic information on layer level 2 and in the mixed light relationship; corresponding to the second light-emitting unit, the sub-special effect information representing the forest has sub-special effect synthetic information on layer level 3; as such, in the second time slice, the synthetic identifications that respectively correspond to the third light-emitting data in the sub-special effect information representing the tortoise and the fourth light-emitting data in the sub-special effect information representing the rabbit have the same layer level, and both relate to the mixed light relationship; then, the third light-emitting data and the fourth light-emitting data are subjected to light mixing calculation to generate second light-emitting information, and the second light-emitting information is used as the light-emitting information of the second light-emitting unit in the second time slice.

Step S1214, according to the alternating relationship, reading timing sequence of the lamp layout layers as indicated by the synthetic identification, and arranging the light-emitting data of the lamp layout layers according to the timing sequence to form the light-emitting information.

The alternating relationship is as follows: in the same time period, a plurality of sub-special effects have corresponding light-emitting data for the same light-emitting unit; the sub-special effect synthetic information respectively corresponding to the multiple pieces of sub-special effect information has the same synthetic identification or different synthetic identifications corresponding to the light-emitting unit; if a plurality of synthetic identifications among them represent the alternating relationship and have the highest layer level, then the light-emitting data corresponding to the plurality of synthetic identifications representing the alternating relationship are arranged sequentially and alternately according to the timing sequence to generate light-emitting information in the same time period.

For example, regarding the three sub-special effects of the lighting special effect information of the race between the hare and the tortoise in the forest as mentioned above, in the third time period, sixth light-emitting data in the sub-special effect representing the tortoise, seventh light-emitting data in the sub-special effect representing the hare, and eighth light-emitting data in the sub-special effect representing the forest all correspond to the third light-emitting unit. In the third time period, corresponding to the third light-emitting unit, the sub-special effect representing the tortoise has sub-special effect synthetic information on layer level 3 and in the alternating relationship; corresponding to the third light-emitting unit, the sub-special effect information representing the hare has sub-special effect synthetic information on layer level 3 and in the alternating relationship; corresponding to the third light-emitting unit, the sub-special effect information representing the forest has sub-special effect synthetic information on layer level 4; as such, in the third time period, the synthetic identifications that respectively correspond to the sixth light-emitting data in the sub-special effect information representing the tortoise and the seventh light-emitting data in the sub-special effect information representing the hare have the same layer level, and both relate to the alternating relationship; then, in the third time period, the third light-emitting unit, the sixth light-emitting data, and the seventh light-emitting data are set sequentially and alternately according to the timing sequence to generate third light-emitting information, and the third light-emitting information is used as the light-emitting information of the third light-emitting unit in the third time period.

Steps S1212, S1213, and S1214 are in parallel with each other.

Step S122, constructing lighting special effect information on the basis of multiple pieces of light-emitting information;

Corresponding to the light-emitting units of the lamp in different time slices or time periods, the plurality of sub-special effect information can execute Step S1212, step S1213, or step S1214 according to respective sub-special effects thereof, so as to generate the light-emitting information of the light-emitting units in different time slices or time periods. Multiple pieces of light-emitting information corresponding to the same light-emitting unit are combined according to the timing sequence to generate unit information in a predetermined time period. Multiple pieces of light-emitting information that respectively correspond to a plurality of light-emitting units form the lighting special effect information of the lamp, i.e., the multiple pieces of light-emitting information that respectively correspond to the plurality of light-emitting units collectively form the lighting special effect information of the lamp, so as to control corresponding light-emitting units to emit light through the unit information in the predetermined time period.

Step S123, encapsulating the lighting special effect information into the lighting effect control instruction.

The unit information that respectively corresponds to a plurality of light-emitting units collectively form the lighting special effect information of the lamp. After generating the lighting special effect information, the first control unit of the terminal apparatus encapsulates the lighting special effect information into the lighting effect control instruction.

In one embodiment, the first control unit displays a corresponding lighting effect on the drawing interface of the display screen on the basis of the lighting special effect information, so as to preview the lighting special effect. If the lighting special effect does not meet expectations, the sub-special effect information that forms the lighting special effect information can be edited continuously.

Step S13, transmitting the lighting effect control instruction to a controller of the lamp to control the lamp to display a lighting special effect defined by the lighting special effect information.

The first control unit of the terminal apparatus sends the lighting effect control instruction to the controller through the first communication unit. The second control unit of the controller receives the lighting effect control instruction through the second communication unit, and the second control unit parses the lighting effect control instruction to obtain the lighting special effect information. Based on the unit information that corresponds to the light-emitting units in the lighting special effect information, the second control unit controls the plurality of light-emitting units to emit predetermined light rays in a predetermined time period, so as to form a predetermined lighting special effect. Multiple pieces of light-emitting information in the unit information sequentially control corresponding light-emitting units to emit different light rays in different time slices or time periods.

After receiving the corresponding unit information output by the second control unit, the third control unit of the light-emitting unit obtains multiple pieces of light-emitting information from the unit information. The third control unit sequentially controls the light-emitting unit to emit predetermined light rays according to the timing sequence of the multiple pieces of light-emitting information in the unit information. Specifically speaking, the third control unit controls red light-emitting elements, green light-emitting elements, and blue light-emitting elements of the light-emitting unit to emit light rays on the basis of RGB data in the light-emitting information, and/or controls a plurality of light-emitting elements to emit light rays with a predetermined light intensity on the basis of light intensity data, and/or controls a plurality of light-emitting elements to emit light rays at a predetermined light-emitting frequency. As such, the third control unit controls a plurality of light-emitting elements to emit predetermined light rays on the basis of the light-emitting information.

A plurality of light-emitting units of the lamp emit predetermined light rays, respectively. The light rays respecitively emitted by the plurality of light-emitting units are combined to form a predetermined lighting effect of the lamp. For example, the light rays respecitively emitted by a plurality of light-emitting units are combined to form one or more of static or dynamic light-emitting graphics, text, or symbols.

The present application further provides a lighting effect control method, which is also implemented on the basis of the light-emitting apparatus. Specifically speaking, in combination with Figure 10, the lighting effect control method comprises specific steps as follows:

Step S21, receiving a lighting effect control instruction sent by an external apparatus, parsing and obtaining multiple pieces of sub-special effect information corresponding to the same lamp;

The external apparatus is the above-mentioned terminal apparatus. After generating sub-special effect information on a plurality of editing layers, the terminal apparatus directly encapsulates the multiple pieces of sub-special effect information into a light effect control instruction. After receiving the lighting effect control instruction, the controller of the lamp parses and obtains the sub-special effect information.

Step S22, synthesizing light-emitting data that correspond to the same light-emitting unit of the lamp in the sub-special effect information on the basis of sub-special effect synthetic information carried in the sub-special effect information or on the basis of default sub-special effect synthetic information to generate light-emitting information;

After obtaining the multiple pieces of sub-special effect information, the second control unit of the controller synthesizes the multiple pieces of sub-special effect information on the basis of the sub-special effect synthetic information in the sub-special effect information to generate light-emitting information that corresponds to the light-emitting units. Multiple pieces of light-emitting information that correspond to the same light-emitting unit in different time slices or time periods form unit information, and the corresponding light-emitting unit is controlled to emit predetermined light rays in a predetermined time period through the unit information. For the specific content of generating the unit information in Step S22, see Step S12. To save space, it will not be repeated herein.

In combination with Figure 11, Step S22 further comprises specific steps as follows:

Step S221: obtaining the sub-special effect synthetic information, which includes a synthetic identification indicative of a synthetic relationship between different pieces of sub-special effect synthetic information, wherein the synthetic relationship includes any one or more of stacking relationship, mixed light relationship, and alternating relationship;

For the specific content of Step S221, see Step S1211. To save space, it will not be repeated herein.

Step S222, according to the stacking relationship, reading layer levels of the sub-special effect information as indicated by the synthetic identification, and using the light-emitting data in relatively topmost sub-special effect information as light-emitting information in corresponding sub-special effect information;

For the specific content of Step S222, see Step S1212. To save space, it will not be repeated herein.

Step S223, according to the mixed light relationship, synthesizing the light-emitting data in the sub-special effect information according to corresponding relationships of the light-emitting units to form the light-emitting information;

For the specific content of Step S223, see Step S1213. To save space, it will not be repeated herein.

Step S224, according to the alternating relationship, reading timing sequence of the sub-special effect information as indicated by the synthetic identification, and arranging the light-emitting data of the sub-special effect information according to the timing sequence to form the light-emitting information.

For the specific content of Step S224, see Step S1214. To save space, it will not be repeated herein.

Step S23, outputting corresponding light-emitting information to light-emitting units of the lamp, and controlling corresponding light-emitting units to emit predetermined light rays, so as to form a predetermined lighting special effect.

The second control unit of the controller sends the unit information to the third control unit of corresponding light-emitting units, and the third control unit sequentially controls the light-emitting units to emit corresponding light rays according to the timing sequence on the basis of the light-emitting information in the unit information. For the specific content of Step S23, see Step S13. To save space, it will not be repeated herein.

The present application further provides a lighting effect generation device, which, in combination with Figure 12, comprises:

a layer generation unit 600 for obtaining light-emitting unit layout information of a lamp, and generating a plurality of lamp layout layers in a drawing interface according to the light-emitting unit layout information;

an instruction generation unit 700 for obtaining sub-special effect information that is respectively generated in the lamp layout layers as the drawing interface receives an external editing instruction, synthesizing multiple pieces of sub-special effect information into lighting special effect information, and encapsulating the lighting special effect information into a lighting effect control instruction;

a drive unit 800 for transmitting the lighting effect control instruction to a controller of the lamp to control the lamp to display a lighting special effect defined by the lighting special effect information.

The present application further provides a storage medium, in which computer-readable instructions are stored, wherein when the computer-readable instructions are executed by one or more processors, said one or more processors are made to execute the steps in the lighting effect generation method or in the lighting effect control method in any embodiment of the present application.

In summary, based on the light effect generation method, the present application respectively and correspondingly edits and generates multiple pieces of sub-special effect information on a plurality of lamp layout layers, and synthesizes the multiple pieces of sub-special effect information into one piece of complete lighting special effect information, so as to control a plurality of light-emitting units of the lamp to emit corresponding light rays to form a predetermined lighting special effect. In other words, by dividing a lighting special effect into a plurality of sub-special effects, a complex lighting special effect is broken down, so as to simplify the setting of the complex light effect, reduce the setting difficulty, and shorten the setting time.

The above content only relates to some manners of implementation of the present application. It should be pointed out that persons skilled in the art can make several improvements and embellishments without departing from the principle of the present application, and these improvements and embellishments should also be deemed to fall within the scope of protection of the present application.

## Claims

1. A lighting effect generation method, comprising steps as follows:
obtaining light-emitting unit layout information of a lamp, and generating a plurality of lamp layout layers in a drawing interface according to the light-emitting unit layout information;
obtaining sub-special effect information that is respectively generated in the lamp layout layers as the drawing interface receives an external editing instruction, synthesizing multiple pieces of sub-special effect information into lighting special effect information, and encapsulating the lighting special effect information into a lighting effect control instruction;
transmitting the lighting effect control instruction to a controller of the lamp to control the lamp to display a lighting special effect defined by the lighting special effect information.

2. The lighting effect generation method according to claim 1, wherein said obtaining light-emitting unit layout information of a lamp and generating a plurality of lamp layout layers in a drawing interface according to the light-emitting unit layout information comprises specific steps as follows:
obtaining the light-emitting unit layout information from the controller, wherein the light-emitting unit layout information includes position information of light-emitting units of the lamp;
creating a plurality of lamp layout layers, and correspondingly converting the position information of the light-emitting units into coordinate point information in the lamp layout layers;
setting a currently visible layer on the basis of the lamp layout layers, and rendering and displaying the currently visible layer.

3. The lighting effect generation method according to claim 1, wherein said synthesizing multiple pieces of sub-special effect information into lighting special effect information comprises specific steps as follows:
synthesizing light-emitting data that correspond to the same light-emitting unit in the sub-special effect information on the basis of sub-special effect synthetic information carried the sub-special effect information or on the basis of default sub-special effect synthetic information to generate light-emitting information;
constructing lighting special effect information on the basis of multiple pieces of light-emitting information;
encapsulating the lighting special effect information into the lighting effect control instruction.

4. The lighting effect generation method according to claim 3, wherein said synthesizing light-emitting data that correspond to the same light-emitting unit in the sub-special effect information on the basis of sub-special effect synthetic information carried the sub-special effect information or on the basis of default sub-special effect synthetic information to generate light-emitting information comprises specific steps as follows:
obtaining the sub-special effect synthetic information, which includes a synthetic identification indicative of a synthetic relationship between different lamp layout layers, wherein the synthetic relationship includes any one or more of stacking relationship, mixed light relationship, and alternating relationship;
according to the stacking relationship, reading layer levels of the lamp layout layers as indicated by the synthetic identification, and using the light-emitting data in a relatively topmost lamp layout layer as light-emitting information in corresponding lighting special effect information;
according to the mixed light relationship, synthesizing the light-emitting data in the lamp layout layers according to corresponding relationships of the light-emitting units to form the light-emitting information;
according to the alternating relationship, reading timing sequence of the lamp layout layers as indicated by the synthetic identification, and arranging the light-emitting data of the lamp layout layers according to the timing sequence to form the light-emitting information.

5. The lighting effect generation method according to claim 2, wherein said setting a currently visible layer on the basis of the lamp layout layers comprises specific steps as follows:
creating a three-dimensional model pattern of the lamp, and tiling a plurality of lamp layout sublayers of the lamp layout layer on view positions of the three-dimensional model pattern according to the position information of the light-emitting units;
adjusting the three-dimensional model pattern to a default view position, so that a lamp layout sublayer at a corresponding position becomes the currently visible layer.

6. The lighting effect generation method according to claim 2, wherein said setting a currently visible layer on the basis of the lamp layout layer comprises specific steps as follows:
creating a three-dimensional model pattern of the lamp, and tiling a plurality of lamp layout sublayers of the lamp layout layer on view positions of the three-dimensional model pattern according to the position information of the light-emitting units;
applying two-dimensionalization to the plurality of lamp layout sublayers and setting one of the lamp layout sublayers to which two-dimensionalization has been applied as the currently visible layer.

7. The lighting effect generation method according to claim 6, wherein two-dimensionalization is applied to the three-dimensional model pattern to embed the plurality of lamp layout sublayers with corresponding parts of the three-dimensional model pattern to which two-dimensionalization has been applied, and a structural relationship between the plurality of lamp layout sublayers and the corresponding parts of the three-dimensional model pattern is determined.

8. The lighting effect generation method according to claim 6, wherein, said setting one of the lamp layout sublayers to which two-dimensionalization has been applied as the currently visible layer comprises specific steps as follows:
receiving a layer selection instruction, and setting one lamp layout sublayer among the plurality of lamp layout layers as the currently visible layer.

9. The lighting effect generation method according to claim 8, further comprising: after setting one lamp layout sublayer among the plurality of lamp layout layers as the currently visible layer, editing a special effect on the currently visible layer.

10. The lighting effect generation method according to claim 9, further comprising: after editing a special effect on the currently visible layer, canceling the currently visible layer to restore the currently visible layer to a lamp layout sublayer.

11. The lighting effect generation method according to claim 4, wherein the stacking relationship is used to indicate that: in the same time slice or time period, multiple pieces of sub-special effect information have corresponding light-emitting data for the same light-emitting unit, the sub-special effect synthetic information respectively corresponding to the multiple pieces of sub-special effect information has different synthetic identifications corresponding to the light-emitting unit, a target synthetic identification that represents the stacking relationship and has the highest layer level is determined from a plurality of synthetic identifications, and the light-emitting data corresponding to the target synthetic identification serve as the light-emitting information in the same time slice or time period.

12. The lighting effect generation method according to claim 4, wherein the mixed light relationship is used to indicate that: in the same time slice or time period, multiple pieces of sub-special effect information have corresponding light-emitting data for the same light-emitting unit, the sub-special effect synthetic information respectively corresponding to the multiple pieces of sub-special effect information has the same synthetic identification or different synthetic identifications corresponding to the light-emitting unit, a plurality of target synthetic identifications that represent the mixed light relationship and have the highest layer level are determined from a plurality of synthetic identifications, and the light-emitting data corresponding to the plurality of target synthetic identifications are subjected to light mixing calculation to generate the light-emitting information in the same time slice or time period.

13. The lighting effect generation method according to claim 4, wherein the alternating relationship is used to indicate that: in the same time period, multiple pieces of sub-special effect information have corresponding light-emitting data for the same light-emitting unit, the sub-special effect synthetic information respectively corresponding to the multiple pieces of sub-special effect information has the same synthetic identification or different synthetic identifications corresponding to the light-emitting unit, a plurality of target synthetic identifications that represent the alternating relationship and have the highest layer level are determined from a plurality of synthetic identifications, and the light-emitting data corresponding to the plurality of target synthetic identifications are arranged sequentially and alternately to generate the light-emitting information in the same time period.

14. The lighting effect generation method according to claim 1, wherein the lighting special effect includes one or more of static or dynamic light-emitting graphics, text, and symbols.

15. A lighting effect control method, comprising steps as follows:
receiving a lighting effect control instruction sent by an external apparatus, parsing and obtaining multiple pieces of sub-special effect information that correspond to the same lamp;
synthesizing light-emitting data that correspond to the same light-emitting unit of the lamp in the sub-special effect information on the basis of sub-special effect synthetic information carried in the sub-special effect information or on the basis of default sub-special effect synthetic information to generate light-emitting information;
outputting corresponding light-emitting information to light-emitting units of the lamp, and controlling corresponding light-emitting units to emit predetermined light rays, so as to form a predetermined lighting special effect.

16. The lighting effect control method as claimed in claim 15, wherein the external apparatus is a terminal apparatus, and after generating sub-special effect information on a plurality of editing layers, the terminal apparatus encapsulates the multiple pieces of sub-special effect information into a lighting effect control instruction; after receiving the lighting effect control instruction, a controller of the lamp parses and obtains the sub-special effect information.

17. The lighting effect control method according to claim 15, wherein, after obtaining the multiple pieces of sub-special effect information, synthesizing the multiple pieces of sub-special effect information on the basis of sub-special effect synthetic information in the sub-special effect information to generate light-emitting information that corresponds to the light-emitting units; using multiple pieces of light-emitting information that correspond to the same light-emitting unit in different time slices or time periods to form unit information, and controlling corresponding light-emitting units to emit predetermined light rays in a predetermined time period through the unit information.

18. The light effect control method according to claim 15, wherein said synthesizing light-emitting data that correspond to the same light-emitting unit of the lamp in the sub-special effect information on the basis of sub-special effect synthetic information carried in the sub-special effect information or on the basis of default sub-special effect synthetic information to generate light-emitting information further comprises steps as follows:
obtaining the sub-special effect synthetic information, which includes a synthetic identification indicative of a synthetic relationship between different pieces of sub-special effect synthetic information, wherein the synthetic relationship includes any one or more of stacking relationship, mixed light relationship, and alternating relationship;
according to the stacking relationship, reading layer levels of the sub-special effect information as indicated by the synthetic identification, and using the light-emitting data in relatively topmost sub-special effect information as light-emitting information in corresponding sub-special effect information;
according to the mixed light relationship, synthesizing the light-emitting data in the sub-special effect information according to corresponding relationships of the light-emitting units to form the light-emitting information;
according to the alternating relationship, reading timing sequence of the sub-special effect information as indicated by the synthetic identification, and arranging the light-emitting data of the sub-special effect information according to the timing sequence to form the light-emitting information.

19. A lighting effect generation device, comprising:
a layer generation unit for obtaining light-emitting unit layout information of a lamp, and generating a plurality of lamp layout layers in a drawing interface according to the light-emitting unit layout information;
an instruction generation unit for obtaining sub-special effect information that is respectively generated in the lamp layout layers as the drawing interface receives an external editing instruction, synthesizing multiple pieces of sub-special effect information into lighting special effect information, and encapsulating the lighting special effect information into a lighting effect control instruction;
a drive unit for transmitting the lighting effect control instruction to a controller of the lamp to control the lamp to display a lighting special effect defined by the lighting special effect information.

20. A computer-readable storage medium, wherein program codes that can be called by a processor to execute the lighting effect generation method according to any one of claims 1 to 14 or the lighting effect control method according to any one of claims 15-18 are stored in the computer-readable storage medium.
